# EUROPEAN PATENT APPLICATION

(11) **EP 4 667 073 A1**
(43) Date of publication of application: **24.12.2025**
(21) Application number: 25182274.8
(22) Date of filing: 12.06.2025
(51) Int. Cl.: A63F 13/52, A63F 13/60, G06T 15/00, A63F 13/67

(54) **METHOD AND SYSTEM FOR DETERMINING SHADERS FOR RENDERING GRAPHICS DATA**

(30) Priority: 13.06.2024 GB 202408508
(71) Applicant: Sony Interactive Entertainment Inc., Tokyo 108-0075 (JP)
(72) Inventor: CERRATO, Maurizio, London, W1F 7LP (GB); SMITH, Alexei Ashton Derek, London, W1F 7LP (GB); ATKINSON-JONES, Byron, London, W1F 7LP (GB)
(74) Representative: Gill Jennings & Every LLP

(57) **Abstract**

A computer implemented method for rendering a scene on a video gaming system comprising a graphics processing unit, the method comprising: determining a required shader for rendering the scene; determining that the required shader is not present within a shader memory, usable by the graphics processing unit; selecting a replacement shader from a plurality of loaded shaders present in the shader memory based on a computed similarity metric, the similarity metric defining the similarity of a rendering output of a loaded shader to a rendering output of the required shader; rendering the scene using the replacement shader.

## Description

### FIELD OF THE INVENTION

The invention relates to the methods and systems for rendering graphics data, particularly for rendering graphics data on a video gaming system.

### BACKGROUND

A typical game requires a large variety of different types of graphical elements to be rendered. These graphical elements are typically rendered using different shaders run on the graphics processing unit (GPU).

Shaders are small programs that enable the GPU to perform complex calculations and simulations and control the properties of rendered graphics. Different shaders can be used depending on the visual effects required to produce a scene. For example, vertex shaders can be used move and position objects in a virtual scene. Fragment shaders or pixel shaders enhance the visual effects of a rendered image by controlling the colour and texture of fragments formed by the vertices and perform calculations for lightning effects to add a degree of depth, to control the colour and appearance of each pixel, and create realistic animation. Specific shaders also support the implementation of other techniques including post-processing effects, such as blur or distortion, and complex material simulations.

Atypical scene in a video game would generally require many different specialised shaders for rendering specific types of scene data. A shader that is able to render lots of different types of scene data and textures requires multiple dynamic branches that does allow the capabilities of a GPU to be effectively utilised and result in significant performance issues. Conversely, there is often insufficient memory in the graphics processing unit memory to pre-prepare every possible variant of shader required for a particular scene.

For video games deployed on systems with different configurations, particularly with respect to different graphics processing unit architectures, the required shaders must be compiled for use. This may occur when a game is executed for the first time, or when required during gameplay, both of which can result in noticeable impact on performance. For gaming consoles, as they are only available in preset configurations, and partly due to data security considerations, all shaders are pre-compiled and included in the game data. Nevertheless, during gameplay, required shaders must still be loaded into the graphics processing unit memory for the system to render scenes for the game.

Whilst pre-compiling the shaders and pre-loading required shaders into the shader pipeline minimise impact on performance during gameplay, the system is limited to only using shaders that have been pre-prepared and loaded before gameplay starts. When the system determines that a required shader is not present for a required rendering task, the shader must be compiled or loaded. As this increases the computational burden on the system, particularly the graphics processing unit and central processing unit, this results in a detrimental effect on gameplay performance and the user experience.

There is accordingly a need for a method that overcomes these issues, and provides greater flexibility in the deployment of shaders, allowing a greater range of task specific shaders to be used while minimising detrimental effects on performance.

It is desired to address or ameliorate one or more disadvantages or limitations associated with the prior art, or to at least provide a useful alternative.

### SUMMARY OF INVENTION

The object of the invention is solved by the features of the independent claims. Further embodiments are the subject-matter of the dependent claims.

In accordance with an embodiment, there is provided a computer implemented method for rendering a scene on a video gaming system comprising a graphics processing unit, the method comprising: determining a required shader for rendering the scene; determining that the required shader is not present within a shader memory, usable by the graphics processing unit; selecting a replacement shader from a plurality of loaded shaders present in the shader memory based on a computed similarity metric, the similarity metric defining the similarity of the rendering output of a loaded shader to the rendering output of the required shader; rendering the scene using the replacement shader.

The video game system can be a general purpose computer system, such as personal desktop computer or laptop, or may be a gaming console.

In this way, performance issues associated with compiling and loading the required shaders are mitigated so that any disruption to gameplay is minimised with just minor variations to the visual appearance of the scene.

This contrasts with conventional system where if a required shader has not been compiled and loaded into the graphics processing unit memory, there may be stuttering or other performance issues while the shader is loaded. If the system is not able to handle the increased graphics load, there can be a noticeable downgrade in graphics quality, and a reduction in frames rendered per second causing gameplay lag.

Optionally, the method comprises: loading the required shader into the shader memory while rendering the scene using the replacement shader; and rendering the scene using the required shader.

Optionally, loading the required shader comprises retrieving the required shader from a storage memory and loading the shader into the shader memory, usable by the graphics processing unit.

Optionally, loading the required shader into the shader memory further comprises performing a check to determine when the required shader has loaded into the shader memory; and switching from rendering the scene with the replacement shader to rendering the scene with the required shader when it is determined that the required shader is loaded into the shader memory.

In this way, any minor variations to the visual appearance of the scene from using the replacement shader will only be present until the required shaders have been loaded.

Given that a complete failure to render frames or with a reduction in the frames per second is more noticeable and detrimental to gameplay than rendering those frames at the desired frames per second with just minor variations to the visual appearance, the present method enables the system to maintain a desired level of performance during gameplay without disrupting the user experience.

Optionally, the shader memory is a temporary memory of the graphics processing unit.

The temporary memory of the graphics processing unit may be Video Random Access Memory (VRAM). It would be generally understood that a portion of the system RAM can be reserved to act as VRAM, the graphics processing unit may have specialised RAM such as Graphics Double Data Rate Synchronous Dynamic Random-Access Memory (GDDR SDRAM), or a combination thereof.

Optionally, the computed similarity metric is calculated at runtime. Alternatively, the computed similarity metric can also be pre-computed.

For computer systems, the computed similarity metric is calculated at runtime due to the almost infinite possible configurations of components that makeup a computer system, with different graphics processing unit architectures. However, the similarity metric is pre-computed for gaming consoles currently available on the market that are only available in preset configurations.

Optionally, pre-computing the similarity metric comprises rendering a reference image with each of a plurality of shaders; calculating a similarity metric between each pair of shaders based on a comparison of the similarity of the reference image rendered with the respective shaders; storing the calculated similarity metric for use when selecting a replacement shader.

Optionally, the reference image comprises a plurality of different graphical components, each requiring different shader input parameters to render the reference image. The plurality of input parameters corresponds to each pixel of the reference image. By modulating the shader parameters on a per pixel basis, the system can cover many different scenarios whilst utilising as few pixels as possible.

Optionally, the required shader input parameters are varied by pixel of the reference image.

Ideally, a reference image would be rendered from pixels based on input parameters relating to as many different combinations as possible. This enables the system to cover as many different aspects as possible of a shader in a single image. The final image would not represent a single scene or surface. Rather, it would represent many scenes or surfaces, appearing as multicoloured noise to the human eye.

It would be understood that the parameters would be modulated in the same way for every shader, meaning any given pixel coordinate would represent the same input scenario across all reference images.In this way, the system is not restricted to only replacing required shaders with a specific replacement shader but can select the most appropriate replacement shader from the shaders that are already loaded.

Optionally, the computer implemented method comprises; storing the similarity metric as metadata associated with each shader; determining, based on the metadata, the replacement shader from the plurality of shaders with highest similarity to the required shader.

Optionally, the computer implemented method comprises; pre-computing a similarity metric for every combination of shaders and storing a similarity map encoding the similarity metric for every combination of shaders; wherein selecting a replacement shader comprises: determining a replacement shader based on the stored similarity map.

Optionally, the loaded shader with the highest similarity to the required shader is selected.

Optionally, the computer implemented method further comprises using a trained machine learning model to output the similarity metric.

Optionally, using the trained machine learning model comprises inputting a plurality of images rendered with respective shaders into a machine learning model trained to output a similarity metric based on the input images.

Optionally, using the trained machine learning model comprises inputting a plurality of source code files for respective shaders into a machine learning model trained to output a similarity metric based on the input source code files.

Optionally, the method comprises: rendering an image with each of a plurality of shaders; inputting each image into a trained machine learning model, the trained machine learning model comprising an encoder, trained to encode the image into an embedding in a vector space; wherein the method comprises computing a similarity metric by computing the vector similarity of two embeddings encoding respective rendered images.

Optionally, the machine learning model comprises an autoencoder.

Optionally, the embedding corresponding to each shader is stored with the shader as metadata; and selecting a replacement shader comprises computing the vector similarity between the required shader and each loaded shader to determine a loaded shader that is most similar to the required shader.

Optionally, determining the similarity metric comprises retrieving shader code for each loaded shader; and determining the similarity metric based on a comparison of the shader code.

In this way, gameplay performance is not adversely affected. Lowering the resolution of the rendered scene while the required shader is being loaded enables the system to balance the increased computational load from compiling, and loading, the required shader, with maintaining a consistent frame per second. Once the required shader has been loaded into the shader memory, the system can reallocate the newly freed computational resource to increasing the resolution of the rendered scene.

Optionally, the video gaming system is a computer or a console.

It would be generally understood that a computer can come in an almost infinite number of possible configurations while a console is generally only offered in preset configurations.

In accordance with an alternative embodiment, there is provided a video game system comprising a memory device and a processor configured to execute the method described above.

In accordance with an alternative embodiment, there is provided a non-transitory storage medium comprising instructions that when executed by a processor cause the processor to perform the method described above.

In accordance with an alternative embodiment, there is provided a computer program that, when executed by a processor, causes the processor to perform the method described above.

### BRIEF DESCRIPTION OF DRAWINGS

Some embodiments of the present invention are hereinafter described, by way of non-limiting example only, with reference to the accompanying drawing, in which:
Figure 1 is a flow diagram corresponding to a computer implemented method for rendering a scene.
Figure 2 is a flow diagram corresponding to the determination of a similarity metric.
Figure 3 is a flow diagram corresponding use of a trained machine learning model.
Figure 4 is a flow diagram corresponding to a method for determining the similarity metric based on a comparison of shader code.
Figure 5 shows an example of a gaming console usable to implement the methods of the present invention.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

The present method addresses the problems handling a large number of shaders by, when a required shader is not present, determining the closest available shader while the required shader is loaded and/or compiled. The method comprises determining that a required shader is not loaded and using a calculated a similarity metric for each shader present, where the similarity metric defines how similar each loaded shader is to the required shader, selecting the shader where the similarity metric indicates it is most similar to the required shader, and using the most similar shader while the required shader is prepared for use.

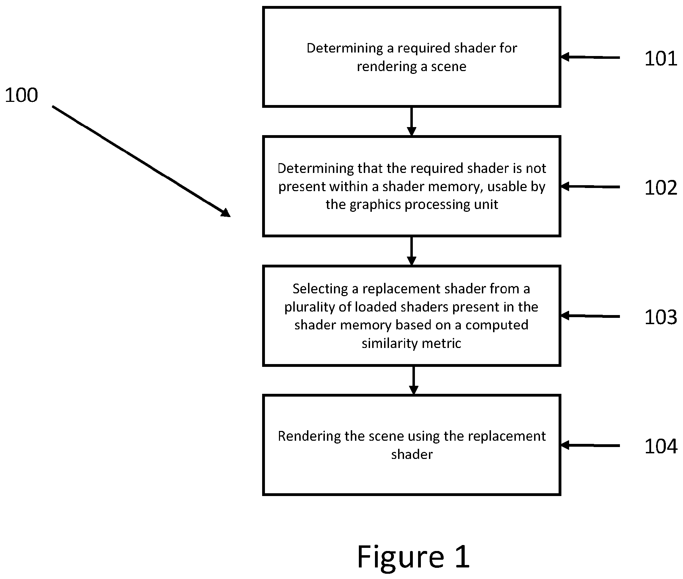

Figure 1 is a flow diagram corresponding to a computer implemented method for rendering a scene in a video game in accordance with an embodiment of the invention. Preferably, the computer implemented method is implemented on a video gaming system comprising a graphics processing unit. The method comprises a first step 101 of determining a required shader for rendering the scene. In a second step 102, the system determines the required shader is not present within a shader memory, usable by the graphics processing unit. In a third step 103, the system selects a replacement shader from a plurality of loaded shaders present in the shader memory based on a computed similarity metric. The similarity metric defines the similarity of the rendering output of each loaded shader to the required shader. Finally, the fourth step 104 involves rendering the scene using the replacement shader.

Preferably, the system subsequently loads the required shader into the shader memory and then renders the scene using the required shader. While the required shader is being loaded, the system performs a check to determine when the required shader has loaded into the shader memory and switches from rendering the scene with the replacement shader to rendering the scene with the required shader when it is determined that the required shader is loaded into the shader memory.

In this way, the system can proceed to render the scene even without the required shaders. By selecting and rendering the scene with a replacement shader, the system avoids the disruption that would normally be caused if the system can only render the scene using the required shader. For example, the user may experience stuttering and lag in gameplay while the system waits for the required shader to be loaded and/or compiled before rendering the scene. Similarly, loading and/or compiling the required shader in near real time while attempting to maintain a consistent framerate and image quality increases the computational burden on the graphics processing unit, thereby resulting in a slowdown of the overall system. The present invention means that the required graphical objects are still rendered, even if not with exactly the intended parameters, while the correct shader is loaded, minimising the impact on performance.

The loaded shaders are loaded by retrieving the shaders from a storage memory, for example disc memory or streamed from a remote storage, and loading the shader into the shader memory, usable by the graphics processing unit.

Rendering the scene using the replacement shader addresses and minimises stuttering and lag in gameplay as it enables the system to continue rendering the scene uninterrupted with just minor variations to the visual appearance of the scene. As the system no longer needs to urgently load and/or compile the required shader as a matter of top priority, the system can balance the increased computational load to prioritise the user experience.

In some instances, this may require temporarily reducing the resolution of the rendered scene until the required shader has been loaded and/or compiled.

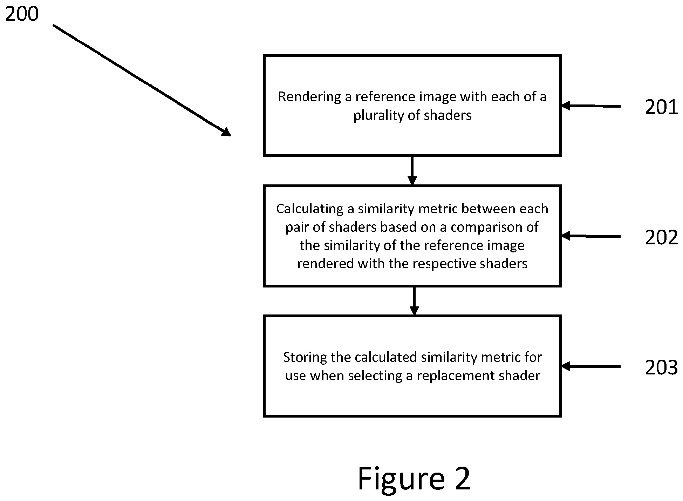

The computed implemented method selects a replacement shader based on a computed similarity metric. Figure 2 is a flow diagram corresponding to a computer implemented method for determining the similarity metric. The similarity metric may be pre-computed or calculated at runtime, depending on the capabilities of the system. For example, the similarity metric may be calculated at runtime in a desktop computer system as the compiled shaders must be compatible with, and suitable for, the architecture specific to each graphics processing unit. The compiled shaders may also need to be compatible with, and suitable for, the other components of the computer system such as the architecture of the central processing unit. In contrast, as gaming consoles are only available in pre-set configurations, it is possible to pre-compile the shaders and pre-compute the similarity metric based on the console's pre-set configuration.

In general, as set out in figure 2, the computer implemented method comprises a first step 201 of rendering a reference image from each of a plurality of shaders. The second step 202 involves calculating a similarity metric between each pair of shaders based on a comparison of the similarity of the storing the calculated similarity metric for use when selecting a replacement shader. Once the similarity metric has been calculated, step three 203 involves storing the calculated similarity metric for use when selecting a replacement shader.

To cover as many scenarios as possible, the shaders can be rendered by modulating the shader input parameters on a per-pixel basis. Every pixel in the image will have a different combination of input parameters so that all aspects and variations of the shader can be covered in one image. That is, rather than the reference image simply comprising a single graphical component, such as a single or a small number of surfaces or materials, the reference image can represent a plurality of different graphical components in order to provide an output indicative of the full range of a shader's rendering output. The reference image can be configured such that it corresponds to a range of different shader parameters in order to sample a range of the possible rendering outputs achievable with the shader. In some examples, the required shader parameters could be modulated on a per-pixel basis, such that every pixel requires different shader parameters to render. In other examples, the shader parameters could be varied based on groups of pixels or at a different resolution.

In this scenario, the final image will not appear as a single scene or surface. Rather, the reference image would represent many scenes and surfaces, appearing as noise to the human eye, but allowing a more complete testing of the shader's rendering output. Such images may be best interpreted by a machine learning model.. For example, the reference images can be input into a machine learning model trained to output a similarity metric based on the input images as described above. The machine learning model would preferably be specifically trained on this type of reference image, comprising a plurality of different image components (a reference image in which the required shader parameters are varied across the image). In this way, the similarity metric can give an indication of the similarity of the rendering output of two shaders, taking into account the full range of shader behaviour. It would be understood that the similarity metric could be stored in temporary memory or long term storage as long as it is accessible to the CPU and GPU.

In this way, the similarity in rendering output of any two shaders may be determined and used in selecting a replacement shader. The reference image could be a particular surface or simply at empty scene, but importantly it should be the same image that is rendered by each shader to facilitate comparison. In some examples this process could be carried out at run time but more preferably it is carried out prior to run-time with the similarity metric for each pair of shaders stored for use in selecting a required shader at runtime.

In this way, the computer implemented method is not restricted in which loaded shader can be utilised as a suitable replacement shader. Instead, once it is determined that a required shader is not present within the shader memory, the system can simply select the most suitable replacement shader from the plurality of shaders already loaded.

Once the similarity metric has been determined, the system can store the similarity metric in temporary memory or long-term memory. In some embodiments, the similarity metric can be transformed into metadata associated with each shader. Storing the similarity metric as metadata also enables the system to determine the replacement shader from the plurality of shaders with highest similarity to the required shader based on the metadata. In some examples the meta data could comprise data associated with the rendering of the reference image. For example parameter values characteristic of the rendered image could be stored as meta data with each shader and then the similarity metric calculated at run time. The parameters should allow shaders to be distinguished, i.e. encode characteristic features of the rendered images. In one example, a reduced dimension encoding of the rendered reference image could be saved as metadata with each shader. In particular a trained machine learning model could be used to encode each rendered reference image into a vector (or "embedding") that is stored as metadata with the associated shader. For example a trained auto encoder could be used to encode the rendered reference image into an embedding stored with each shader. Then, when the required shader is found not to be present in the shader memory, the replacement shader can be selected by computing the vector similarity (for example the cosine similarity) between the required shader embedding and each loaded shader embedding, to select the shader that is most similar to the required shader.

In some examples, the embeddings, characteristic of the rendering output of each shader, can be stored in a memory that is readily accessible to perform the calculation at runtime, such as a memory of the GPU or CPU. In this case, the characteristic embedding of the required shader is readily accessible even if the required shader is not loaded. This would be possible since the characteristic embeddings would occupy relatively little memory and so embeddings for each possible shader could be relatively easily stored. In some examples this concept could be extended by pre-computing the vector similarity between every possible pair of shader embeddings. These vector similarities would form a similarity "map", encoding the similarity in rendering output between every possible combination of shaders. This could be stored as a matrix or look-up table that is readily accessible to the GPU and CPU to allow the most similar loaded shader to any possible shader to be determined.

Alternative ways of encoding the characteristics of a shader, other than the rendering of a reference image may be used in a similar way. For example, the source code (shader code or binary) may be used. The similarity metric for each combination of shaders may be calculated based on a comparison of this source code, instead of a comparison of reference images. In some cases, the source code could be encoded into an embedding using a machine learning based encoder model to store characteristics features of the code as a reduced dimension vector (i.e. an embedding). As above, the embeddings based on the source code may be stored for a similarity comparison to be performed at runtime or alternatively all similarity calculations may be performed prior to run time, with a similarity map or table based on the vector similarities of the source code embeddings stored for use at runtime.

In practice, the system may transform the similarity metric into metadata by first pre-computing the the similarity metric, storing the similarity metric as metadata associated with each shader, and then determining, based on the metadata, the replacement shader from the plurality of shaders with highest similarity to the required shader. It follows that the system then selects the loaded shader with the highest similarity to the required shader to be used as the replacement shader.

As described above, in some embodiments, the similarity metric can be determined based on the shader code. In this configuration, the system retrieves shader code for each shader and then determines the similarity metric based on the shader code for each shader. This could be performed at runtime or at the development stage when assembling the game data.

The similarity metric can be determined by a similarity map encoding the similarity between each shader and every other shader. The map can be stored in system memory and used to make decisions at run time, or as required depending on the nature of gameplay and the scene being rendered.

In some embodiments, the similarity metric can be determined using a trained machine learning model. As described above, one example would be using a trained encoder model to output a vector embedding. In other examples, a machine learning model could be trained to output a similarity metric directly based on input data, for example two input rendered reference images. The trained machine learning model would be capable of transforming a plurality of rendered images based on each shader into a similarity metric.

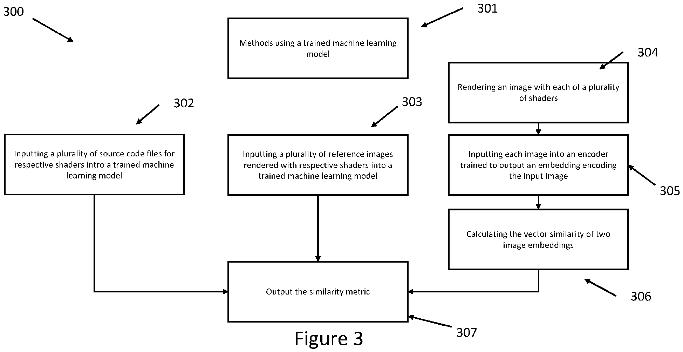

Figure 3 is a flow diagram corresponding to using a trained machine learning model 300. Although there can be several

The first step 301 involves using the trained machine learning model to output the similarity metric 307. A trained machine learning model can be utilised in several ways 301.

In some embodiments, a plurality of source code files for respective shaders 302 into the trained machine learning model. Another way involves inputting a plurality of reference images rendered with respective shaders into the trained machine learning model 303. Alternatively, the system can be configured to render an image with each of a plurality of shaders 304, and each image is then inputted into an encoder 305. The encoder is trained to encode the image into an embedding in a vector space, and the similarity metric is computed by computing the vector similarity of two embeddings encoding respective rendered images 306.

Where the similarity metric is to be determined by a similarity map, a suitable encoder can be used to encode each image into an embedding in a vector space and computing the vector similarity of the embeddings. This may involve an autoencoder model to learn a vector space for encoding the images.

It would be understood that the method used will depend on the nature of the scene required to be rendered, and the conditions associated with the input for the trained machine model may comprise properties of specific shaders that are sufficiently similar so that the output is not easily noticeable or discernible by the user.

By way of example, the conditions can involve specifying the colour attributes of shaders that would be deemed sufficiently similar and suitable to be used as a replacement shader. Similarly, replacement pixel shaders can still be suitable for supporting the implementation of the same or similar post-processing effects that would otherwise be achieved using the required shader.

In some embodiments, the trained machine learning model can access features from a feature store. A feature store provides a set of core or commonly used features that can be adapted for new purposes. Similarly, a communal feature store enables the same trained machine learning model to be used for different shaders, or to render different types of scenes. The feature store may be an open-source feature store, or specially developed for the computer implemented method.

In some embodiments, the computer implemented method can reduce the resolution of the rendered scene to maintain a consistent user experience. In practice, this can involve rendering one or more frames at a first resolution using the replacement shader. Once the system determines that the required shader has been loaded into the shader memory, the system then renders one or more frames at a second resolution using the required shader.

Reducing the resolution enables the system to assign more computational resources to loading and/or compiling the required shader and minimise impact to framerate thereby reducing the likelihood of stuttering or lag.

Depending on the nature of the game executed on the computer system, the framerate may be variable or unlocked. Alternatively, the framerate may be locked such that high priority is placed on maintaining the framerate at a certain value.

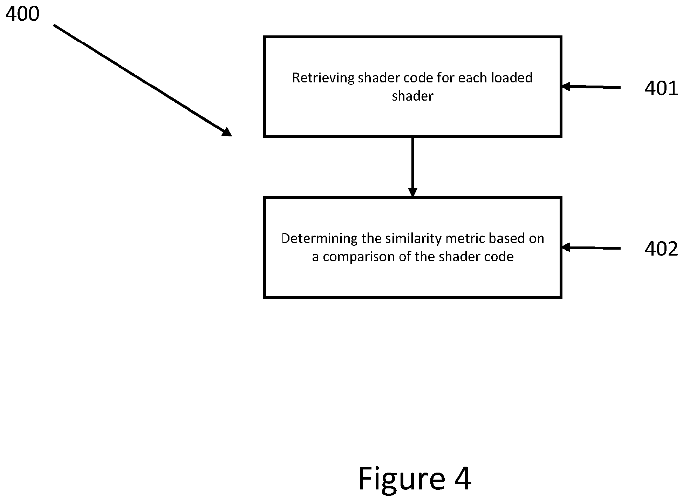

The similarity metric can also be determined based on a comparison of the shader code. The shader code enables the CPU to instruct the GPU how to render each pixel. In the example shown in figure 4, the system 400 would retrieve shader code for each loaded shader 401 and, based on the retrieved shader code, determine the similarity metric based on a comparison of the shader code 402.

As explained above, the system may be a general-purpose computer system or a gaming console.

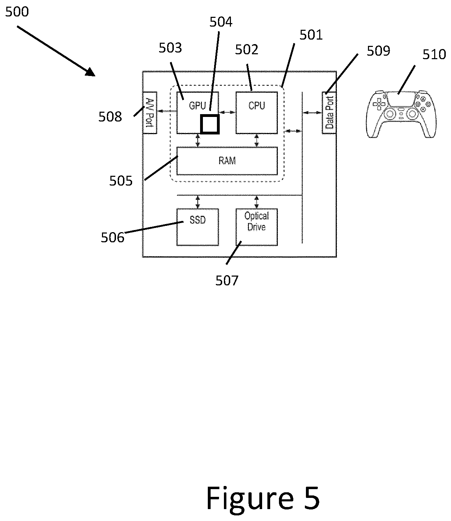

Figure 5 shows an example of a gaming console 500 usable to implement the methods of the present invention. Generally, gaming consoles will have a preset processing compartment 501 comprising a central processing unit 502, a graphics processing unit 503, and random-access memory 505.

In some embodiments, the graphics processing unit 503 may be part of, and integrated, with the central processing unit 502. With this configuration, random-access memory 505 is shared between the graphics processing unit 503 and central processing unit 502. Access to the random-access memory 505 may be pre-set such that the graphics processing unit 503 and central processing unit 502 are each assigned a set portion of the random-access memory 505, dynamic such that the system is able to adjust the amount of resource provided depending on the demands of the task being performed, or a combination thereof.

In other embodiments, the graphics processing unit 503 and central processing unit 502 are separate discrete components. The graphics processing unit 503 will have access to dedicated Video Random Access Memory which may be specialised RAM such as Graphics Double Data Rate Synchronous Dynamic Random-Access Memory. Similarly, the central processing unit 502 will be access to dedicated cache memory. Both the graphics processing unit 503 and central processing unit 502 will have access to shared random-access memory 505. A portion of the shared random-access memory 505 can be reserved to act as VRAM alongside.

The system also includes storage such as a solid-state drive 506. In some embodiments, data may be stored on a hard disc drive, or a combination thereof. The storage unit may also be a drive external to the system. The system also includes an optical drive 507 for retrieving data from optical discs, an A/V port 508 connectable to a display device, such as a television or monitor, and a data port 509. As with the storage unit, the optical drive may also be external to the system. It would be understood that the system can have multiple A/V ports 508 and multiple data ports 509. In embodiments, the A/V ports can be any one or more of a DisplayPort or High-Definition Multimedia Interface (HDMI) port. In practice, the processing compartment 501 produces audio and video commands which are transmitted, via the A/V port, to the external display device. These commands specify how objects should be rendered including their position, orientation textures, shades, and other rendering parameters.

In embodiments, the data ports can be one or more of USB-A, USB-C, or any standard port for the connection of peripherals, such as a gaming controller 510. Preferably, the data port is also capable of supplying power for charging the peripheral device.

## Claims

1. A computer implemented method for rendering a scene on a video gaming system comprising a graphics processing unit, the method comprising:
determining a required shader for rendering the scene;
determining that the required shader is not present within a shader memory, usable by the graphics processing unit;
selecting a replacement shader from a plurality of loaded shaders present in the shader memory based on a computed similarity metric, the similarity metric defining the similarity of a rendering output of a loaded shader to a rendering output of the required shader;
rendering the scene using the replacement shader.

2. The computer implemented method of claim 1, wherein the computed similarity metric is pre-computed prior to runtime and stored in a memory of the video gaming system.

3. The computer implemented method of claim 2, wherein pre-computing the similarity metric comprises:
rendering a reference image with each of a plurality of shaders;
calculating a similarity metric between each pair of shaders based on a comparison of the similarity of the reference image rendered with the respective shaders;
storing the calculated similarity metric for use when selecting a replacement shader.

4. The computer implemented method of claim 3, wherein the reference image comprises a plurality of different graphical components, each requiring different shader input parameters to render the reference image.

5. The computer implemented method of claim 3 or 4, wherein the required shader input parameters are varied by pixel of the reference image.

6. The computer implemented method of any of claims 2 to 5, wherein the computer implemented method comprises:
storing the similarity metric as metadata associated with each shader;
determining, based on the metadata, the replacement shader from the plurality of shaders with highest similarity to the required shader.

7. The computer implemented method of any of claims 2 to 6, wherein the computer implemented method comprises:
pre-computing a similarity metric for every combination of shaders and storing a similarity map encoding the similarity metric for every combination of shaders; wherein selecting a replacement shader comprises:
determining a replacement shader based on the stored similarity map.

8. The computer implemented method of any one of the preceding claims, wherein the method further comprises using a trained machine learning model to output the similarity metric.

9. The computer implemented method of claim 8, wherein using the trained machine learning model comprises:
inputting a plurality of images rendered with respective shaders into a machine learning model trained to output a similarity metric based on the input images.

10. The computer implemented method of claim 8, wherein using the trained machine learning model comprises:
inputting a plurality of source code files for respective shaders into a machine learning model trained to output a similarity metric based on the input source code files.

11. The computer implemented method of claim 8 wherein the method comprises:
rendering an image with each of a plurality of shaders;
inputting each image into a trained machine learning model, the trained machine learning model comprising an encoder, trained to encode the image into an embedding in a vector space; wherein the method comprises computing a similarity metric by computing the vector similarity of two embeddings encoding respective rendered images.

12. The computer implemented method of claim 11 wherein the embedding corresponding to each shader is stored with the shader as metadata; and selecting a replacement shader comprises computing the vector similarity between the required shader and each loaded shader to determine a loaded shader that is most similar to the required shader.

13. A video game system comprising a memory device and a processor configured to execute the method of any one of claims 1 to 12.

14. A non-transitory storage medium comprising instructions that when executed by a processor cause the processor to perform the method of any one of claims 1 to 12.

15. A computer program comprising instructions that when executed by a processor cause the processor to perform the method of any one of claims 1 to 12.
